# EUROPEAN PATENT SPECIFICATION

(11) **EP 2 072 359 B1**
(45) Date of publication and mention of the grant of the patent: **16.10.2013**
(21) Application number: 07123483.5
(22) Date of filing: 18.12.2007
(51) Int. Cl.: B60T 7/12

(54) **Method and device for controlling the intervention of the electric parking brake of a vehicle**
Verfahren und Vorrichtung zur Steuerung des Eingriffs der elektrischen Parkbremse eines Fahrzeugs
Procédé et dispositif pour le contrôle de l'intervention du frein à main électrique d'un véhicule

(43) Date of publication of application: 24.06.2009
(73) Proprietor: IVECO S.p.A., 10156 Torino (IT)
(72) Inventor: Fisanotti, Giovanni, 10014 Caluso (IT)
(74) Representative: Borsano, Corrado

(56) References cited:
- FR-A- 2 813 837
- GB-A- 2 051 986
- JP-A- 1 172 049
- JP-A- 11 165 618
- JP-A- 59 020 753
- JP-A- 2005 313 819
- US-A1- 2002 189 882
- US-A1- 2003 221 922

## Description

The present invention refers to a method and device for controlling the intervention of the electric parking brake of a vehicle.

Some vehicles are equipped with an electric parking brake, that usually consists of an electric motor that may pull or release the brake cable (replacing the manual activation by means of a lever) which activates the brakes.

Usually it is activated by means of an electric control, for example by pressing a button on the dashboard, or by an automatic control in certain operating conditions of the vehicle.

The electric parking brake traditionally has two types of functioning:
- a first type of static functioning, in which the brake is activated when the vehicle is stationary, in order to guarantee that the vehicle keeps motionless;
- a second type of dynamic functioning, in which the brake is used as an emergency brake when the vehicle is in motion, for example in case of failure of the service brake.

The functioning of the parking brake may be controlled electronically, in order to check the conditions which determine its intervention and the way it intervenes.

In the static functioning, it is known that the electronic control determines the automatic intervention of the electric parking brake, when it detects the conditions of stationary vehicle (zero speed) and, at the same time, of open door.

The patent US2003221922 discloses a parking brake system wherein the presence of driver on his seat and the opening of the door are monitored for determining the activation of the brakes.

This type of control, however, is not sufficient to guarantee the safety conditions of the intervention according to the real behaviour of the driver of the vehicle.

Therefore, the aim of this invention is to overcome the drawbacks mentioned above and to provide a method and device for controlling the intervention of the electric parking brake of a vehicle, which guarantees the best intervention according to the real behaviour of the vehicle's driver.

According to the invention, the intervention of the electric parking brake is determined by the detection of the driver's presence on his/her seat, in order to verify if the driver has actually left the vehicle. If the driver is sitting on his/her seat, the brake does not intervene, while it intervenes if the driver leaves the seat.

This invention refers in particular to a method and device for controlling the intervention of the electric parking brake of a vehicle, as described more fully in the claims, which are an integral part of this description.

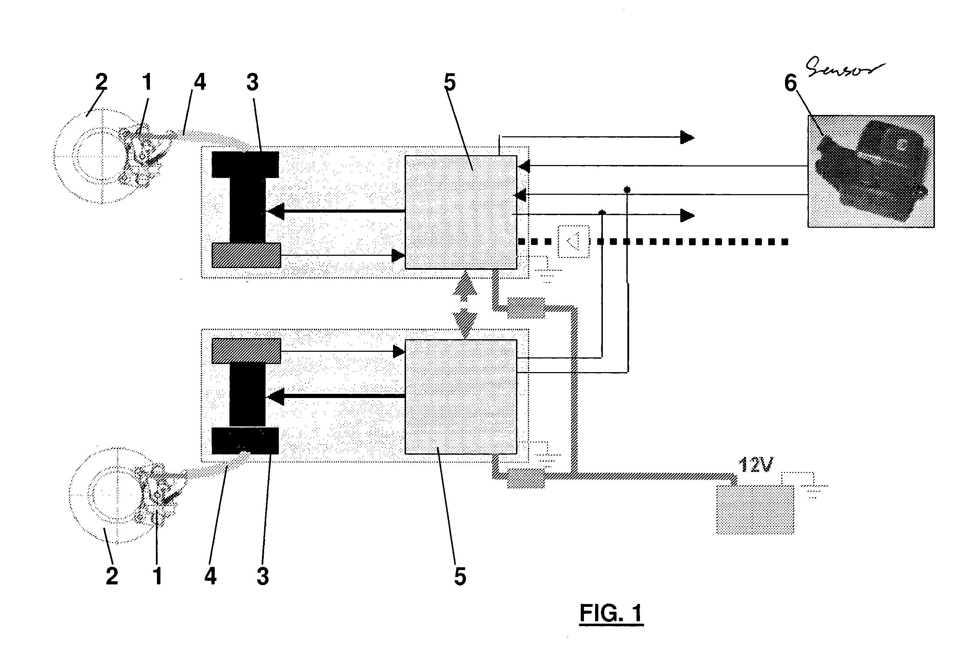

The purposes and advantages of this invention will be clear from the detailed description that follows of an example of embodiment thereof (and of its variants) and from the drawings provided for example purposes only and not to be considered restrictive, in which the figure 1 illustrate an embodiment scheme of the device to which this invention refers.

The control method of the intervention of the electric parking brake of the vehicle, according to the main aspect of this invention, comprises the control of the driver's presence on his/her seat. If the driver is sitting on his/her seat, the brake does not intervene, while it intervenes if the driver leaves his/her seat.

Moreover this control is preferably added to those traditionally present in the vehicle, that is the open door control and the zero speed control, as a further condition that has to be simultaneously verified: the electric parking brake is activated if all these three conditions are fulfilled at the same time.

It should be noted that the vehicle may be either with the engine stopped or with the engine started in neutral.

According to a first embodiment of the invention, the control of the driver's presence on his/her seat is carried out by means of a suitable pressure sensor that is present in the seat and sends a signal of presence/absence of pressure, which therefore tells if the driver is sitting on his/her seat, to the control unit that determines the intervention of the brake.

According to a second embodiment of the invention, a timer may be present that, after a certain interval of time, re-activates the parking brake, after a first activation, in the condition of driver's absence.

This guarantees the safety, for example in case of release of the brake for unexpected reasons.

In other cases, according to the controls of the known type, if the vehicle stops, the parking brake automatically activates. The driver, however, can deactivate the brake, with the vehicle on flat ground, by means of a button or an open/close switch. The parking brake will not be activated again. If the driver leaves the vehicle, the system cannot become aware that it is necessary to activate the brake again. For this reason a timer is activated from the moment when the brake is released, and, after a predetermined period of time, the brake is automatically reactivated.

For example, when the driver gets out of the vehicle, the door is opened with the vehicle stationary: according to the control of the known type, the brake automatically intervenes. But then the driver may get on again without sitting, for example standing on the running board with the door closed, the window opened, and the vehicle stationary, and may release the hand brake by pressing the button in order to move the vehicle forward.

According to the known type of control, the brake is actually released and this implies the risk that the vehicle starts to move uncontrollably, for example if the vehicle is on a slope.

While, using the method according to the invention, if the driver is not sitting on the driver's seat, the parking brake cannot be released, therefore the safety is guaranteed.

Therefore, according to the invention, the electric parking brake can intervene in frequent dangerous situations, depending on the presence of the driver on his/her seat, and when it is possible to deactivate/release the brake manually, for example by means of a button on the dashboard.

It should be noted that if a timer is present, the electric parking brake may intervene both if the driver is present and if the driver is not present on his/her seat.

As regards the device, with reference to figure 1, the parking brake 1 operates on a pair of wheels 2, and is activated by means of a single electric motor, or of one electric motor 3 per wheel, which pulls or releases its own brake cable 4.

Each electric motor is controlled by an electronic control unit 5 which collects the signals of the various sensors of the vehicle. In addition to the sensors that may be present according to known devices, such as, for example, an open/close door sensor, or a sensor for the detection of the vehicle's movement, according to this invention there is a sensor 6 for the detection of the driver's presence on his/her seat, for example a pressure sensor mounted in the seat in a known way.

In the vehicle control unit, a timer may also be present. At the end of a predetermined interval of time, this timer reactivates the parking brake, after a first activation.

The electronic control unit is programmed in a way known in the prior art, for example using the usual programming language for vehicle control units, but an additional part of the program carries out the method according to the invention. Therefore the method according to this invention can be applied advantageously by means of a computer program, which comprises program code means performing one or more steps of said method, when said program is run on a computer. For this reason the scope of the present invention is meant to cover also said computer program and the computer-readable medium that comprises a recorded message, such computer-readable medium comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Method for controlling the automatic intervention of the electric parking brake of a vehicle, the engine of said vehicle being either stopped or started in neutral, the activation of the parking brake being depending on the absence of the driver and/or the opening of a door, said intervention being inhibited by means of a button, the method **characterized in that** it comprises a step of controlling the functioning of said button with respect to the presence/absence of the driver on his/her seat, the functioning of the button being inhibited in case of the driver is absent on his seat.

2. Method according to claim 1, wherein said activation of the parking brake is also depending on a vehicle speed greater then zero.

3. Method according to claim 1 or 2, wherein it further comprises a timing which determines the reactivation of the parking brake, after a certain interval of time after a deactivation by means of said button.

4. Method according to any of the preceding claims, wherein it further comprises a timing which determines the reactivation of the parking brake, after a certain interval of time after a first activation.

5. Device for controlling the automatic intervention of the electric parking brake of a vehicle, the engine of said vehicle being either stopped or started in neutral, comprising control means for carrying out an open door control and a stationary vehicle control which operate in conjunction with a sensor (6) of the driver's presence on his/her seat the activation of the parking brake being depending on the absence of the driver and/or the opening of a door, and a button for inhibiting said intervention, the device being **characterized in that** it comprises means for controlling the functioning of said button with respect to the presence/absence of the driver on his/her seat, and means for inhibiting the functioning of the button in case of the driver is absent on his seat.

6. Device according to the claim 5, comprising a button to inhibit the intervention of the parking brake and wherein said control means are configured for carrying out the method according to any of the claims 1 to 4.

7. Computer program comprising program code means suitable for performing the steps of any claim from 1 to 4, when such program is run on a computer.

8. Computer-readable means comprising a recorded program, said computer-readable means comprising program code means suitable for performing the steps according to any claim from 1 to 4, when said program is run on a computer.

## Patentansprüche

1. Verfahren zum Steuern des automatischen Eingriffs der elektrischen Parkbremse eines Fahrzeugs, wobei der Motor des Fahrzeugs entweder gestoppt oder in Leerlaufstellung gestartet wird, die Aktivierung der Parkbremse von der Abwesenheit des Fahrers und/oder der Öffnung einer Tür abhängt, der Eingriff durch einen Knopf verhindert wird, wobei das Verfahren **dadurch gekennzeichnet ist, dass** es einen Schritt der Steuerung des Funktionierens des Knopfs aufweist, mit Bezug zu der Anwesenheit/Abwesenheit des Fahrers auf seinem/ihrem Sitz, wobei das Funktionieren des Knopfs in dem Fall verhindert wird, wenn der Fahrer auf seinem Sitz abwesend ist.

2. Verfahren nach Anspruch 1, wobei die Aktivierung der Parkbremse auch von einer Fahrzeuggeschwindigkeit größer als Null abhängig ist.

3. Verfahren nach Anspruch 1 oder 2, wobei es weiter ein Timing aufweist, das die Reaktivierung der Parkbremse nach einer bestimmten Zeitspanne nach einer Deaktivierung durch den Knopf bestimmt.

4. Verfahren nach einem der vorhergehenden Ansprüche, wobei es weiter ein Timing aufweist, das die Reaktivierung der Parkbremse nach einer bestimmten Zeitspanne nach einer ersten Aktivierung bestimmt.

5. Vorrichtung zum Steuern des automatischen Eingriffs der elektrischen Parkbremse eines Fahrzeugs, wobei der Motor des Fahrzeugs entweder gestoppt oder in Leerlaufstellung gestartet wird, aufweisend Steuermittel zum Ausführen einer Kontrolle einer geöffneten Tür und einer stationären Fahrzeugkontrolle, die in Verbindung mit einem Sensor (6) für die Fahreranwesenheit auf seinem/ihrem Sitz arbeiten, wobei die Aktivierung der Parkbremse von der Abwesenheit des Fahrers und/oder der Öffnung einer Tür abhängt, und einem Knopf zum Verhindern des Eingriffs, wobei die Vorrichtung **dadurch gekennzeichnet ist, dass** sie Mittel zum Steuern des Funktionierens des Knopfs aufweist, mit Bezug zu der Anwesenheit/Abwesenheit des Fahrers auf seinem/ihrem Sitz, und Mittel zum Verhindern des Funktionierens des Knopfs in dem Fall, dass der Fahrer auf seinem Sitz abwesend ist.

6. Vorrichtung nach Anspruch 5, aufweisend einen Knopf, um den Eingriff der Parkbremse zu verhindern, und wobei die Steuermittel konfiguriert sind, um das Verfahren nach einem der Ansprüche 1 bis 4 auszuführen.

7. Computerprogramm aufweisend Programmcodemittel, die zum Ausführen der Schritte nach einem der Ansprüche 1 bis 4 geeignet sind, wenn ein solches Programm auf einem Computer ausgeführt wird.

8. Computerlesbare Mittel aufweisend ein gespeichertes Programm, wobei die computerlesbaren Mittel Programmcodemittel aufweisen, die zum Ausführen der Schritte nach einem der Ansprüche 1 bis 4 geeignet sind, wenn das Programm auf einem Computer ausgeführt wird.

## Revendications

1. Procédé pour contrôler l'intervention automatique du frein de stationnement électrique d'un véhicule, le moteur dudit véhicule étant arrêté ou démarré au point mort, l'activation du frein de stationnement dépendant de l'absence du conducteur et/ou de l'ouverture d'une porte, ladite intervention étant inhibée au moyen d'un bouton, le procédé étant **caractérisé en ce qu'**il comprend une étape de contrôle du fonctionnement dudit bouton relativement à la présence/l'absence du conducteur sur son siège, le fonctionnement du bouton étant inhibé si le conducteur est absent de son siège.

2. Procédé selon la revendication 1, dans lequel ladite activation du frein de stationnement dépend également du fait que la vitesse du véhicule soit supérieure à zéro.

3. Procédé selon la revendication 1 ou 2, comprenant en outre une temporisation qui détermine la réactivation du frein de stationnement, un certain laps de temps après une désactivation au moyen dudit bouton.

4. Procédé selon l'une quelconque des revendications précédentes, comprenant en outre une temporisation qui détermine la réactivation du frein de stationnement, un certain laps de temps après une première activation.

5. Dispositif pour contrôler l'intervention automatique du frein de stationnement électrique d'un véhicule, le moteur dudit véhicule étant arrêté ou démarré au point mort, comprenant des moyens de contrôle pour effectuer un contrôle de porte ouverte et un contrôle de véhicule à l'arrêt, qui fonctionnent en combinaison avec un capteur (6) de présence du conducteur sur son siège, l'activation du frein de stationnement dépendant de l'absence du conducteur et/ou de l'ouverture d'une porte, et un bouton pour inhiber ladite intervention, le dispositif étant **caractérisé en ce qu'**il comprend des moyens pour contrôler le fonctionnement dudit bouton relativement à la présence/à l'absence du conducteur sur son siège, et des moyens pour inhiber le fonctionnement du bouton si le conducteur est absent de son siège.

6. Dispositif selon la revendication 5, comprenant un bouton pour inhiber l'intervention du frein de stationnement et dans lequel lesdits moyens de contrôle sont configurés pour réaliser le procédé selon l'une quelconque des revendications 1 à 4.

7. Programme informatique comprenant des moyens de codage de programme adaptés pour réaliser les étapes selon l'une quelconque des revendications 1 à 4, quand ce programme est exécuté sur un ordinateur.

8. Moyens lisibles sur ordinateur, comprenant un programme enregistré, lesdits moyens lisibles sur ordinateur comprenant des moyens de codage de programme adaptés pour réaliser les étapes selon l'une quelconque des revendications 1 à 4, quand ledit programme est exécuté sur un ordinateur.
